# EUROPEAN PATENT APPLICATION

(11) **EP 3 379 742 A1**
(43) Date of publication of application: **26.09.2018**
(21) Application number: 17162109.7
(22) Date of filing: 21.03.2017
(51) Int. Cl.: H04B 10/071, H04B 10/272, H04J 14/02

(54) **A BRANCHING NODE AND A METHOD OF PERFORMING AN OTDR MEASUREMENT**

(71) Applicant: Nokia Solutions and Networks Oy, 02610 Espoo (FI)
(72) Inventor: Hehmann, Jörg, 70435 Stuttgart (DE); Straub, Michael, 70435 Stuttgart (DE)
(74) Representative: Louis Pöhlau Lohrentz

(57) **Abstract**

The present invention discloses a branching node and a method of performing OTDR measurement in an optical communication system.

The branching node comprises an input port and a first number of output ports, an input signal on the input port of the branching node comprising a node controlling signal and a data signal. The branching node comprises: a first wavelength division multiplexer configured to receive the input signal and separate the node controlling signal from the data signal, an optical power splitter, configured on downstream of the first wavelength division multiplexer being configured to split the data signal onto the first number of branches, a switch with two input ends and two output ends configured on each of the branches, wherein, the switches on the first number of branches are cascaded connected, and a node controller, coupled between the first wavelength division multiplexer and the switches on the first number of branches, and being configured to control a working state of the switches according to the node controlling signal.

## Description

### Field of the invention

The invention relates to communication technology, in particular to OTDR measurement in an optical communication system.

### Background

Optical time-domain reflectometer (OTDR) measurement is often used in an optical communication system to characterize an optical path.

While performing an OTDR measurement, a series of optical pulses will be injected into the fiber under test, and light that is scattered or reflected back from points along the fiber is extracted from the same end of the fiber. The scattered or reflected light that is gathered back is used to characterize the optical fiber.

In a passive optical network (PON), the OTDR test signal is send from the central office and distributed to all branches in network by the optical power splitter. The signal strength of the OTDR test signal is reduced by the splitter losses. The backscattered light of the OTDR test signal is attenuated again by passing the splitter in opposite direction and the signals of the different branches are overlapped. The attenuation of the splitter and the overlapping of the backscattered light are limiting the application of the OTDR measurements in PON systems up to now.

An object of the invention is to solve the limitations of the OTDR behind the splitter in a PON architecture.

### Summary of the Invention

The object of the invention is achieved by the branching node and method in the claims.

According to one aspect of the invention, there is provided a branching node with an input port and a first number of output ports in an optical communication system, the first number being an integer number no less than 2, an input signal on the input port of the branching node comprising a node controlling signal and a data signal, wherein, the node controlling signal and the data signal are carried on different wavelength, the branching node comprising: a first wavelength division multiplexer configured to receive the input signal and separate the node controlling signal from the data signal, an optical power splitter, configured on downstream of the first wavelength division multiplexer being configured to split the data signal onto the first number of branches, a switch with two input ends and two output ends configured on each of the branches, each of the switches comprising: a first input end being configured to receive the data signal split by the optical power splitter; a first output end being coupled to an output port of the branching node; wherein, the switches on the first number of branches are cascaded connected by configuring a second input end of a first switch to receive an OTDR test signal, and coupling a second output end of one switch that already has a second input to the second input end of one switch that has no second input yet, the branching node further comprising: a node controller, coupled between the first wavelength division multiplexer and the switches on the first number of branches, and being configured to control a working state of the switches according to the node controlling signal.

In a preferred embodiment of the invention, each of the switches is configured to work in a cross state, connecting the first input end of the switch to the second output end of the switch, and connecting the second input end of the switch to the first output end of the switch, or a bar state, connecting the first input end of the switch to the first output end of the switch, and connecting the second input end of the switch to the second output end of the switch.

In a preferred embodiment of the invention, the input signal on the input port of the branching node further comprises an OTDR test signal carried on a further wavelength, the branching node further comprising: a second wavelength division multiplexer, configured to separate the OTDR test signal from the input signal and feed the OTDR test signal to the second input end of the first switch.

In a preferred embodiment of the invention, the input signal on the input port of the branching node further comprises an OTDR test signal carried on a further wavelength, the first wavelength division multiplexer being further configured to separate the OTDR test signal from the input signal and feed the OTDR test signal to the second input end of the first switch.

In a preferred embodiment of the invention, the branching node further comprises an OTDR test signal transmitter configured to transmit the OTDR test signal to the second input end of the first switch and an OTDR test signal receiver configured to receive a backscattered or reflected signal.

In a preferred embodiment of the invention, the branching node further comprises a third wavelength division multiplexer coupled to the second input end of the first switch, wherein, the second output end of the switch at the end of the cascaded switches is fed back to the third wavelength division multiplexer, the third wavelength division multiplexer being configured to combine the OTDR test signal and the signal fed back from the second output end of the switch at the end of the cascaded switches, and feed a combined signal to the second input end of the first switch.

In a preferred embodiment of the invention, an insertion loss of each of the switches is no higher than 0.1 dB.

In a preferred embodiment of the invention, the node controller is configured to control the working state of the switches according to the node controlling signal, so that the OTDR test signal is output on one output port of the branching node.

In a preferred embodiment of the invention, the data signal comprised in the input signal is carried on a single wavelength, an optical network unit, ONU, connected to an output port of the branching node, being configured to select data for itself from the data signal according to an identification.

In a preferred embodiment of the invention, the data signal comprised in the input signal is carried on at least two different wavelengths, an optical network unit, ONU, connected to an output port of the branching node, comprising a filter configured to select a signal carried on a specific wavelength for the ONU.

In a preferred embodiment of the invention, the ONU is further configured to select data for itself from the signal carried on the specific wavelength according to an identification.

In a preferred embodiment of the invention, the branching node works bi-directionally, the optical power splitter being further configured to combine signals from the first number of branches and feed the combined signal to the first wavelength division multiplexer, the first wavelength division multiplexer being further configured to forward the combined signal to a central office.

According to another aspect of the invention, there is provided a method of performing an OTDR, measurement in an optical communication system, the optical communication system comprising: at least one branching node with an input port and a first number of output ports according to the first aspect of the invention, the method comprising: receiving an input signal on the input port of the branching node, the input signal comprising a node controlling signal and a data signal; separating the node controlling signal from the data signal; splitting the data signal onto the first number of branches; receiving an OTDR test signal at the second input end of the first switch; controlling the working state of the switches according to the node controlling signal, so that the OTDR test signal is output on an output port of the branching node; receiving a backscattered or reflected signal from the output port, determining a parameter of an optical path connected after the output port based on the received backscattered or reflected signal.

In a preferred embodiment of the invention, the method further comprises steps of: determining an optical path on which the OTDR measurement is to be performed; and configuring the node controlling signal according to the determined optical path.

In a preferred embodiment of the invention, the input signal on the input port of the branching node further comprises an OTDR test signal, the method further comprising: separating the OTDR test signal from the input signal and feeding the OTDR test signal to the second input end of the first switch.

According to the present invention, the optical paths behind the splitter can be measured separately and there is no overlapping of the backscattered signals from the different lines. Additionally, the bypass of the splitter reduces the attenuation of the OTDR signals significantly. The solution enables an OTDR measurement behind the splitters in PON systems. The value of the OTDR measurement is considerable increased for the operator. The solution allows the OTDR measurement in the distribution and drop sections of PON networks.

Furthermore, with the help of the loop back path, a parallel operation of data transport and OTDR measurement would be possible.

### Brief description of the figures

The features and advantages of the invention will be more completely understood by appreciating the following detailed description of preferred embodiments with reference to the figures, wherein
Fig. 1 depicts a schematic block diagram of a branching node 100 according to a first embodiment of the invention;
Fig. 2 depicts another operating state of the branching node 100 according to the first embodiment of the invention;
Fig. 3 depicts a schematic block diagram of a branching node 200 according to a second embodiment of the invention;
Fig. 4 depicts another operating state of the branching node 200 according to the second embodiment of the invention;
Fig. 5 depicts a schematic block diagram of a branching node 300 according to a third embodiment of the invention;
Fig. 6 depicts another operating state of the branching node 300 according to the third embodiment of the invention;
Fig.7 depicts a schematic block diagram of a branching node 400 according to a fourth embodiment of the invention;
Fig.8 depicts another operating state of the branching node 400 according to the fourth embodiment of the invention.

Wherein, same or similar reference numerals refer to same or similar parts or components.

### Detailed description

Exemplary embodiments of the present application are described herein in detail and shown by way of example in the drawings. It should be understood that, although specific exemplary embodiments are discussed herein there is no intent to limit the scope of the invention to such embodiments. To the contrary, it should be understood that the exemplary embodiments discussed herein are for illustrative purposes, and that modified and alternative embodiments may be implemented without departing from the scope of the invention. Similarly, specific structural and functional details disclosed herein are merely representative for purposes of describing the exemplary embodiments. The invention described herein, however, may be embodied in many alternate forms and should not be construed as limited to only the embodiments set forth herein.

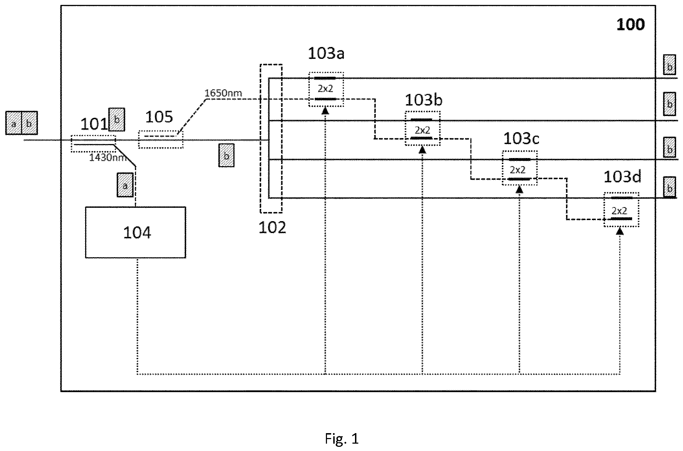

Fig. 1 depicts a schematic block diagram of a branching node 100 working as a normal power splitter according to a first embodiment of the invention.

In Fig.1, the branching node 100 comprises an input port and four output ports. A skilled person should understand, the number of the output ports is not limited to the given example. The number of the output ports may be any integer number no less than 2. In another embodiment of the present invention, the branching node 100 may comprise 16, 32, or 64 output ports according to the demand of the network.

The branching node 100 comprises a first wavelength division multiplexer 101 and a second wavelength division multiplexer 105. In one embodiment, the first wavelength division multiplexer 101 and the second wavelength division multiplexer 105 may be coarse wavelength division multiplexers. In Fig.1, the first wavelength division multiplexer 101 is coupled to the input port of the branching node 100 to receive the input signal. The second wavelength division multiplexer 105 is configured on the downstream of the first wavelength division multiplexer 101. A skilled person should understand, the sequence of the first and second wavelength division multiplexer 101 and 105 is not limited to the given example. In another embodiment, the second wavelength division multiplexer 105 may also be coupled to the input port of the branching node 100, and the first wavelength division multiplexer 101 may be coupled to the output of the second wavelength division multiplexer 105.

In the embodiment shown in Fig. 1, the input signal on the input port of the branching node may comprise a node controlling signal, a data signal and an OTDR test signal when necessary. The node controlling signal, the data signal and the OTDR test signal are carried on different wavelength so that they can be separated by the wavelength division multiplexer(s). In an exemplary embodiment, the node controlling signal is carried on a wavelength of 1430nm which is a reserved wavelength, and is usually not used for normal data transmission. The data signal is carried on a wavelength of 1490 nm, and the OTDR test signal is carried on a wavelength of 1650nm. A skilled person should understand, the wavelength of the above mentioned signals shall not be limited to the given example.

In Fig. 1, the first wavelength division multiplexer 101 is configured to separate the node controlling signal from the data signal and the OTDR test signal, the second wavelength division multiplexer 105 is configured to separate the OTDR test signal from the data signal.

In another embodiment, the first wavelength division multiplexer 101 may be configured to separate all the signals carried on different wavelength comprised in its input signal from each other. Then the branching node 100 may comprise only one wavelength division multiplexer 101.

The branching node 100 further comprises an optical power splitter 102 coupled to the second wavelength division multiplexer 105. A skilled person should understand, the location of the optical power splitter 102 may be adapted according the configuration of the first and second wavelength division multiplexer 101 and 105. The optical power splitter 102 is configured to split the data signal onto four branches in power. The output signal on each branch is same as the data signal input to the optical power splitter 102. However, the output signal on each branch has only one fourth (or less considering the splitter loss) of the power of the data signal input to the optical power splitter 102.

On each of the four output branches of the optical power splitter 102, there is configured a switch 103a, 103b, 103c and 103d respectively. The switches 103a, 103b, 103c and 103d may be generally referred to as switches 103 in the description. Each switch 103 has two input ends and two output ends, among which a first input end is configured to receive the data signal split by the optical power splitter 102 and a first output end is coupled to an output port of the branching node 100.

Furthermore, the second input end of a first switch 103a is coupled to the output of the second wavelength division multiplexer 105, so as to receive the OTDR test signal from the second wavelength division multiplexer 105. A skilled person shall understand, in another embodiment, the second input end of the first switch 103a may receive the OTDR test signal from first wavelength division multiplexer 101 according to the other possible configurations of the first and second wavelength division multiplexer 101 and 105 mentioned above.

The switches 103 are cascaded connected by coupling a second output end of one switch that already has a second input to the second input end of one switch that has no second input yet.

Specifically, in Fig. 1, the second output end of the first switch103a is coupled to the second input end of the second switch 103b. The second output end of the second switch103b is coupled to the second input end of the third switch 103c. The second output end of the third switch103c is coupled to the second input end of the fourth switch 103d.

The branching node 100 further comprises a node controller 104. The node controller 104 is coupled between the first wavelength division multiplexer 101 and the switches 103. The node controller 104 receives the node controlling signal from the first wavelength division multiplexer 101 and controls the working state of the switches 103 according to the node controlling signal.

Each of the switches 103 may work in a cross state or a bar state. In the cross state, the first input end of the switch 103 is connected to the second output end of the switch 103, and the second input end of the switch 103 is connected to the first output end of the switch 103. In the bar state, the first input end of the switch 103 is connected to the first output end of the switch 103, and the second input end of the switch 103 is connected to the second output end of the switch 103.

In an embodiment, the insertion loss of the switches 103 is no higher than 0.1dB. By using switches with low insertion loss, the additional loss for the data signal, as well as for the OTDR signals is kept in a proper range. To keep attenuation and size in a reasonable range, a fully integrated Planar Lightwave Circuit (PLC) solution may be adopted.

While the branching node 100 is working as a normal power splitter, the input signal on the input port of the branching node 100 may comprise only the node controlling signal a and the data signal b. No OTDR signal is applied. The node controller 104 sets the switches 103 to be in bar state as shown in Fig. 1 according to the received node controlling signal a.

In one embodiment, the data signal b comprised in the input signal is carried on a single wavelength. The ONUs, connected to the output ports of the branching node 100 are going to receive the same data signal b, and they are configured to select data for itself from the data signal b according to an identification.

In another embodiment, the data signal b comprised in the input signal is carried on at least two different wavelengths. Each of the ONUs connected to the output ports of the branching node 100 comprises a filter configured to select a signal carried on a specific wavelength for the ONU. Each ONU is further configured to select data for itself from the signal carried on the specific wavelength according to an identification.

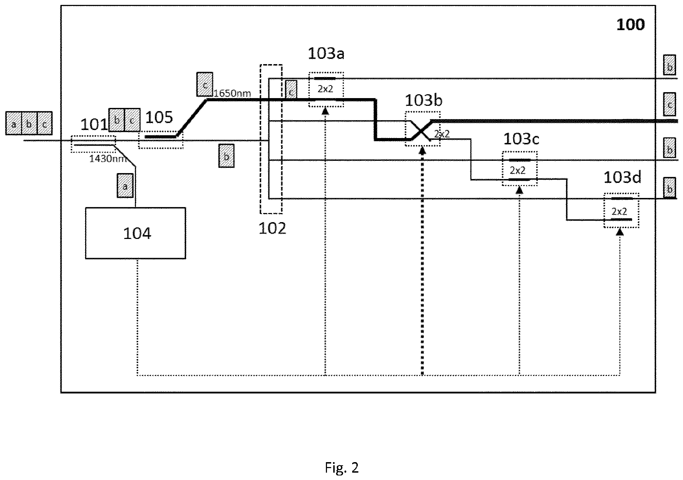

Fig. 2 depicts another operating state of the branching node 100 enabling the OTDR measurement according to the first embodiment of the invention.

As shown in Fig. 2, the input signal on the input port of the branching node 100 comprises the node controlling signal a, the data signal b and the OTDR signal c. The node controlling signal a, the data signal b and the OTDR signal c may be send from the central office of the PON architecture.

The first wavelength division multiplexer 101 separates the node controlling signal a from the input signal, and feeds the node controlling signal a to the node controller 104. The data signal b and the OTDR test signal c are fed together to the input of the second wavelength division multiplexer 105. The second wavelength division multiplexer 105 separates the OTDR test signal c from the data signal b and feeds the OTDR test signal c to the second input end of the first switch 103a. The data signal b is fed to the optical power splitter 102 and split onto four branches.

The node controller 104 sets the working state of the switches 103 according to the received the node controlling signal a, so that the OTDR test signal is output on an output port of the branching node 100.

In Fig.2, the switches 103a, 103c and 103d are in bar state. Therefore, the data signal b split by the optical power splitter is directly output on the first, the third and the fourth output port of the branching node 100.

The switch 103b on the second branch is in cross state. The OTDR test signal c is output on the second output port of the branching node 100.

The optical path connected after the second output port of the branching node 100 receives the OTDR test signal c and may feed back reflected or backscattered light signal. The OTDR receiver may be located at the central office side and the reflected or backscattered light signal from the optical path connected after the second output port is routed through the branching node 100 and feedback to the central office. The OTDR receiver in the central office receives the backscattered or reflected signal.

The central office further determines a parameter of the optical path connected after the second output port based on the received backscattered or reflected signal.

Specifically, branching node 100 works bi-directionally, the optical power splitter 102 combines upstream signals from all the branches (upstream data signal, backscattered and/or reflected OTDR test signal) and feeds the combined signal to the second wavelength division multiplexer 105. The second wavelength division multiplexer 105 feeds the combined signal to the first wavelength division multiplexer 101. The first wavelength division multiplexer feeds the combined signal to the central office (not shown).

A skilled person should understand, the upstream data signal may be sent from the ONUs connected to the output ports of the branching node 100 on a time divisional basis.

Seen from Fig.2, in order to measure a dedicated line behind the splitter, the associated switch has to be switched over to a cross state so that the OTDR signal can pass the line. In that case, the data path is blocked, however, in case of connectivity problems, this can be tolerated.

The method of performing an OTDR measurement according to the present invention further comprises steps of: determining an optical path on which the OTDR measurement is to be performed; and configuring the node controlling signal according to the determined optical path.

Specifically, in order to trigger the OTDR measurement, the node controller 104 can be addressed from central office side to prepare the switches 103 for the OTDR measurement. According to the first embodiment of the present invention, remotely powered node controller equipment can be used to avoid the need for a local power supply.

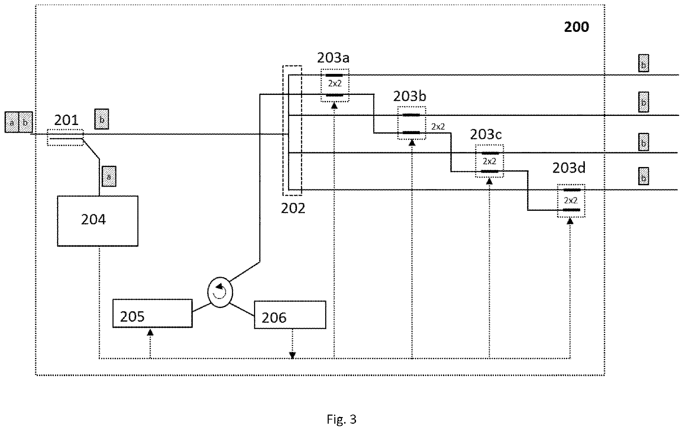

Fig. 3 depicts a schematic block diagram of a branching node 200 working as a normal power splitter according to a second embodiment of the invention.

In Fig. 3, the branching node 200 comprises a first wavelength division multiplexer 201, an optical power splitter 202, cascaded switches 203a, 203b, 203c and 203d (generally referred to as 203) and a node controller 204.

For simplicity, the functionality of the above mentioned components will not be detailed elaborated here, since they are same as described above in the first embodiment.

The second embodiment of the present invention is different from the first embodiment only in the location of the OTDR test signal transmitter and receiver. In the first embodiment, the OTDR test signal comes from the central office and the backscattered or reflected light signal is fed back to the central office, while in the second embodiment, the OTDR test signal transmitter and receiver are located within the branching node 200.

The branching node 200 further comprises an OTDR test signal transmitter 205 configured to transmit the OTDR test signal to the second input end of the first switch 203a and an OTDR test signal receiver 206 configured to receive a backscattered or reflected signal. In Fig.3, the OTDR test signal transmitter 205 and the OTDR test signal 206 are combined together by a circulator.

In Fig. 3, the branching node is working as a normal power splitter. During operation, the node controller 204 intrusts the OTDR test signal transmitter 205 to or not to transmit the OTDR test signal c according to the node controlling signal a received by the node controller 204. Since the switches 203 are all set in bar state, the data signal b will be output on each of the output ports. Even if the OTDR test signal transmitter 205 transmits the OTDR test signal c to the second input end of the first switch 203a, there will be no OTDR test signal c output on the output ports.

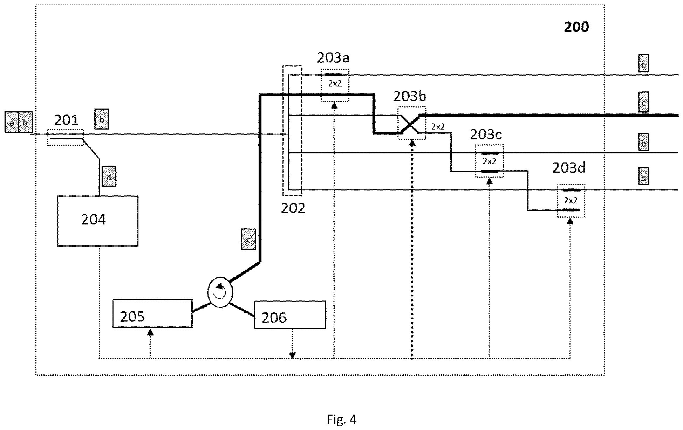

Fig. 4 depicts another operating state of the branching node 200 enabling the OTDR measurement according to the second embodiment of the invention.

In Fig.4, the node controller 204 instructs the OTDR test signal transmitter 205 to transmit the OTDR test signal c to the second input end of the first switch 203a.

Same as described with respect to Fig.2, the second switch 203b is set in cross state in Fig. 4, so that the OTDR test signal c is output on the second output port of the branching node 200.

The backscattered or reflected light from the optical path connected after the second output port of the branching node 200 is routed through the second branching node 200 and received by the OTDR test signal receiver 206. Then a parameter of the optical path connected after the second output port may be determined based on the received backscattered or reflected signal at the OTDR test signal receiver 206 or at the central office (not shown). In one embodiment, the OTDR test signal receiver 206 determines the parameter of the optical path, and further sends the determined parameter to the node controller 204. The node controller 206 forwards the determined parameter to the central office (not shown). In another embodiment, the the OTDR test signal receiver 206 forwards the backscattered or reflected signal to the node controller 204, the node controller 204 performs necessary processing (e.g. wavelength conversion) before sending the backscattered or reflected signal to the central office (not shown). The central office will determine the parameter of the optical path based on the backscattered or reflected signal.

By arranging the full OTDR measurement equipment at the branching node 200, some more energy at the node is required, however, even for this approach, remote power supply is feasible.

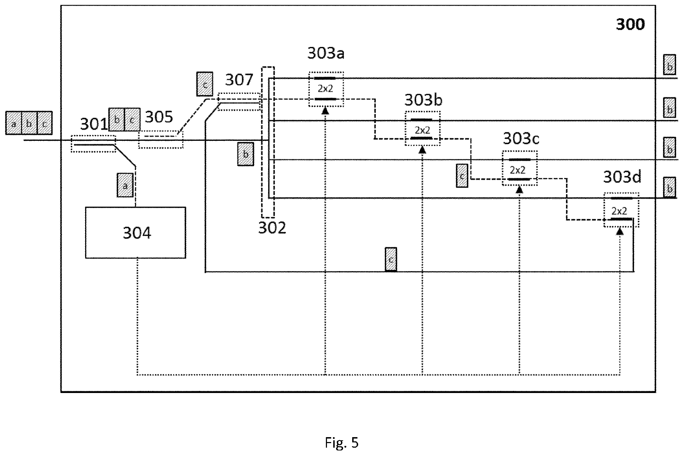

Fig. 5 depicts a schematic block diagram of a branching node 300 working as a normal power splitter according to a third embodiment of the invention.

In Fig. 5, the branching node 300 comprises a first wavelength division multiplexer 301, a second wavelength division multiplexer 305, an optical power splitter 302 (not shown), cascaded switches 303a, 303b, 303c and 303d (generally referred to as 303) and a node controller 304.

For simplicity, the functionality of the above mentioned components will not be detailed elaborated here, since they are same as described above in the first embodiment.

The branching node 300 further comprises a third wavelength division multiplexer 307 coupled between the second wavelength division multiplexer 305 and the second input end of the first switch 303a. The second output end of the fourth switch 303d being at the end of the cascaded switches 303 is fed back to the input of the third wavelength division multiplexer 307. The third wavelength division multiplexer 307 is configured to combine the OTDR test signal c from the second wavelength division multiplexer 305 and the signal fed back from the second output end of the fourth switch 303d, and feed a combined signal to the second input end of the first switch 303a.

While working as a normal power splitter, the branching node 300 works same as the branching node 100. Data signal b will be output on each of the output ports of the branching node 300.

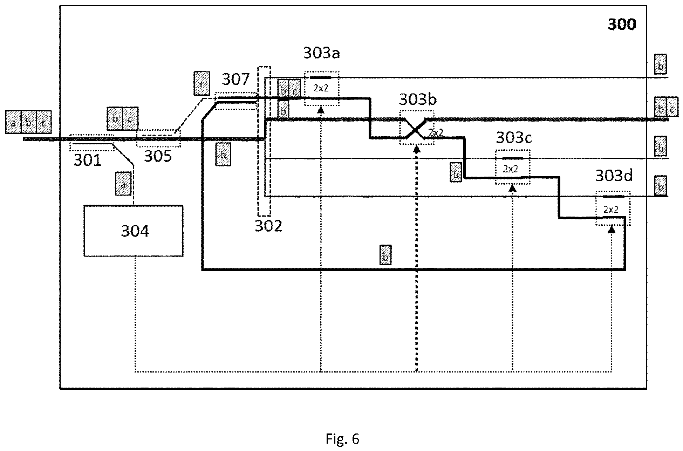

Fig. 6 depicts another operating state of the branching node 300 enabling a parallel operation of the OTDR measurement and data transmission according to the third embodiment of the invention.

In Fig. 6, the second switch 303b is set in cross state. The data signal b on the first input end of the second switch 303b is output on the second output end of the second switch 303b. The data signal b is further routed through the third switch 303c and the fourth switch 303d back to the third wavelength division multiplexer 307.

The third wavelength division multiplexer 307 combines the OTDR test signal c from the second wavelength division multiplexer 305 and the data signal b fed back from the second output end of the fourth switch 303d, and feeds the combined signal b+c to the second input end of the first switch 303a. The combined signal b+c is routed through the first switch 303a and the second switch 303b and output on the second output port of the branching node 300.

Thereby, the OTDR measurement and the data transmission can be carried out in parallel on a selected branch.

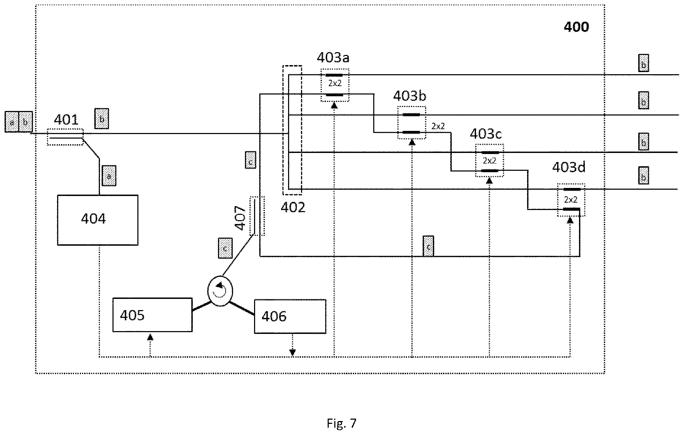

Fig.7 depicts a schematic block diagram of a branching node 400 working as a normal power splitter according to a fourth embodiment of the invention.

In Fig. 7, the branching node 400 comprises a first wavelength division multiplexer 401, an optical power splitter 402, cascaded switches 403a, 403b, 403c and 403d (generally referred to as 403) and a node controller 404.

For simplicity, the functionality of the above mentioned components will not be detailed elaborated here, since they are same as described above in the first embodiment.

The branching node 400 further comprises a third wavelength division multiplexer 407 coupled between the OTDR test signal transmitter 405 and the second input end of the first switch 403a. The second output end of the fourth switch 403d being at the end of the cascaded switches 403 is fed back to the input of the third wavelength division multiplexer 407. The third wavelength division multiplexer 407 is configured to combine the OTDR test signal c from the OTDR test signal transmitter 405 and the signal fed back from the second output end of the fourth switch 403d, and feed the combined signal to the second input end of the first switch 403a.

While working as a normal power splitter, the branching node 400 works same as the branching node 200. Data signal b will be output on each of the output ports of the branching node 400.

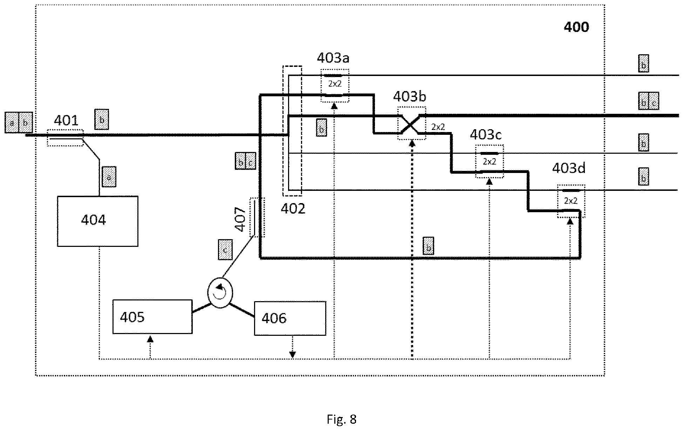

Fig.8 depicts another operating state of the branching node 400 enabling a parallel operation of the OTDR measurement and data transmission according to the fourth embodiment of the invention.

Similar as described with respect to Fig. 6, the data signal b is fed back to the third wavelength division multiplexer 407. The third wavelength division multiplexer 407 combines the OTDR test signal c from the OTDR test signal transmitter 405 and the data signal b fed back from the second output end of the fourth switch 403d, and feeds the combined signal b+c to the second input end of the first switch 403a. The combined signal b+c is then routed through the first switch 403a and the second switch 403b and output on the second output port of the branching node 400.

According to the fourth embodiment of the invention, data transmission may be maintained while performing OTDR measurement.

## Claims

1. A branching node (100, 200, 300, 400) with an input port and a first number of output ports in an optical communication system, the first number being an integer number no less than 2, an input signal on the input port of the branching node comprising a node controlling signal and a data signal, wherein, the node controlling signal and the data signal are carried on different wavelength,
the branching node (100, 200, 300, 400) comprising:
a first wavelength division multiplexer (101, 201, 301, 401) configured to receive the input signal and separate the node controlling signal from the data signal,
an optical power splitter, configured on downstream of the first wavelength division multiplexer being configured to split the data signal onto the first number of branches,
a switch (103, 203, 303, 403) with two input ends and two output ends configured on each of the branches, each of the switches (103, 203, 303, 403) comprising:
a first input end being configured to receive the data signal split by the optical power splitter;
a first output end being coupled to an output port of the branching node (100, 200, 300, 400);
wherein, the switches (103, 203, 303, 403) on the first number of branches are cascaded connected by configuring a second input end of a first switch (103a, 203a, 303a, 403a) to receive an Optical time-domain reflectometer, OTDR,
test signal, and coupling a second output end of one switch that already has a second input to the second input end of one switch that has no second input yet,
the branching node (100, 200, 300, 400) further comprising:
a node controller (104, 204, 304, 404), coupled between the first wavelength division multiplexer (101, 201, 301, 401) and the switches (103, 203, 303, 403) on the first number of branches, and being configured to control a working state of the switches (103, 203, 303, 403) according to the node controlling signal.

2. A branching node (100, 200, 300, 400) according to claim 1, wherein, each of the switches (103, 203, 303, 403) is configured to work in
a cross state, connecting the first input end of the switch (103, 203, 303, 403) to the second output end of the switch (103, 203, 303, 403), and connecting the second input end of the switch (103, 203, 303, 403) to the first output end of the switch (103, 203, 303, 403),
or
a bar state, connecting the first input end of the switch (103, 203, 303, 403) to the first output end of the switch (103, 203, 303, 403), and connecting the second input end of the switch (103, 203, 303, 403) to the second output end of the switch (103, 203, 303, 403).

3. A branching node (100, 200, 300, 400) according to claim 1, the input signal on the input port of the branching node (100, 200, 300, 400) further comprising an OTDR test signal carried on a further wavelength,
the branching node (100, 200, 300, 400) further comprising:
a second wavelength division multiplexer, configured to separate the OTDR test signal from the input signal and feed the OTDR test signal to the second input end of the first switch (103a, 203a, 303a, 403a).

4. A branching node (100, 200, 300, 400) according to claim 1, the input signal on the input port of the branching node (100, 200, 300, 400) further comprising an OTDR test signal carried on a further wavelength,
the first wavelength division multiplexer (101, 201, 301, 401) being further configured to separate the OTDR test signal from the input signal and feed the OTDR test signal to the second input end of the first switch (103a, 203a, 303a, 403a).

5. A branching node (100, 200, 300, 400) according to claim 1, further comprising an OTDR test signal transmitter (205, 405) configured to transmit the OTDR test signal to the second input end of the first switch (203a, 403a) and an OTDR test signal receiver (206, 406) configured to receive a backscattered or reflected signal.

6. A branching node (100, 200, 300, 400) according to claim 1, further comprising a third wavelength division multiplexer (307, 407) coupled to the second input end of the first switch (303a, 403a),
wherein, the second output end of the switch at the end of the cascaded switches (303, 403) is fed back to the third wavelength division multiplexer,
the third wavelength division multiplexer being configured to combine the OTDR test signal and the signal fed back from the second output end of the switch at the end of the cascaded switches (303, 403), and feed a combined signal to the second input end of the first switch (303a, 403a).

7. A branching node (100, 200, 300, 400) according to any one of claims 1-6, wherein, an insertion loss of each of the switches (103, 203, 303, 403) is no higher than 0.1dB.

8. A branching node (100, 200, 300, 400) according to claim 1, wherein, the node controller (104, 204, 304, 404) is configured to control the working state of the switches (103, 203, 303, 403) according to the node controlling signal, so that the OTDR test signal is output on one output port of the branching node (100, 200, 300, 400).

9. A branching node (100, 200, 300, 400) according to claim 1, wherein, the data signal comprised in the input signal is carried on a single wavelength,
an optical network unit, ONU, connected to an output port of the branching node (100, 200, 300, 400), being configured to select data for itself from the data signal according to an identification.

10. A branching node (100, 200, 300, 400) according to claim 1, wherein, the data signal comprised in the input signal is carried on at least two different wavelengths, an optical network unit, ONU, connected to an output port of the branching node (100, 200, 300, 400), comprising a filter configured to select a signal carried on a specific wavelength for the ONU.

11. A branching node (100, 200, 300, 400) according to claim 8, wherein, the ONU is further configured to select data for itself from the signal carried on the specific wavelength according to an identification.

12. A branching node (100, 200, 300, 400) according to claim 1, wherein, the branching node (100, 200, 300, 400) works bi-directionally,
the optical power splitter being further configured to combine signals from the first number of branches and feed the combined signal to the first wavelength division multiplexer,
the first wavelength division multiplexer (101, 201, 301, 401) being further configured to forward the combined signal to a central office.

13. A method of performing an Optical time-domain reflectometer, OTDR, measurement in an optical communication system,
the optical communication system comprising:
at least one branching node (100, 200, 300, 400) with an input port and a first number of output ports according to any one of claims 1-12,
the method comprising:
receiving an input signal on the input port of the branching node (100, 200, 300, 400), the input signal comprising a node controlling signal and a data signal;
separating the node controlling signal from the data signal;
splitting the data signal onto the first number of branches;
receiving an OTDR test signal at the second input end of the first switch (103a, 203a, 303a, 403a);
controlling the working state of the switches (103, 203, 303, 403) according to the node controlling signal, so that the OTDR test signal is output on an output port of the branching node (100, 200, 300, 400);
receiving a backscattered or reflected signal from the output port,
determining a parameter of an optical path connected after the output port based on the received backscattered or reflected signal.

14. A method according to claim 13, further comprising steps of:
determining an optical path on which the OTDR measurement is to be performed; and
configuring the node controlling signal according to the determined optical path.

15. A method according to claim 13, the input signal on the input port of the branching node (100, 200, 300, 400) further comprising an OTDR test signal, the method further comprising:
separating the OTDR test signal from the input signal and feeding the OTDR test signal to the second input end of the first switch (103a, 203a, 303a, 403a).
